# EUROPÄISCHE PATENTSCHRIFT

(11) **EP 3 561 999 B1**
(45) Veröffentlichungstag und Bekanntmachung des Hinweises auf die Patenterteilung: **03.01.2024**
(21) Anmeldenummer: 19163609.1
(22) Anmeldetag: 19.03.2019
(51) Int. Cl.: H02K 1/276, H02K 21/14

(54) **ELEKTRISCHE MASCHINE MIT VERÄNDERLICHEM MAGNETISCHEM FLUSS**
ELECTRIC MACHINE WITH VARIABLE MAGNETIC FLUX
MACHINE ÉLECTRIQUE À FLUX MAGNÉTIQUE VARIABLE

(30) Priorität: 26.04.2018 DE 102018206478
(43) Veröffentlichungstag der Anmeldung: 30.10.2019
(73) Patentinhaber: Robert Bosch GmbH, 70442 Stuttgart (DE)
(72) Erfinder: Li, Xiang, 71254 Ditzingen (DE); Zhang, Bo, 70176 Stuttgart (DE)

(56) Entgegenhaltungen:
- EP-A1- 3 675 329
- WO-A1-2018/051526
- CN-A- 102 403 856
- CN-A- 103 441 592
- DE-T5-112012 005 688
- JP-A- 2013 034 317
- US-A1- 2007 063 607
- US-A1- 2010 327 787
- SAKAI K ET AL: "Principle of the variable-magnetic-force memory motor", ELECTRICAL MACHINES AND SYSTEMS, 2009. ICEMS 2009. INTERNATIONAL CONFERENCE ON, IEEE, PISCATAWAY, NJ, USA, 15. November 2009 (2009-11-15), Seiten 1-6, XP031612074, ISBN: 978-1-4244-5177-7
- YUJI OKAMURA ET AL: "Permanent magnet motor capable of changing the number of poles by a factor of three", 2013 INTERNATIONAL CONFERENCE ON ELECTRICAL MACHINES AND SYSTEMS (ICEMS), 26. Oktober 2013 (2013-10-26), Seiten 1122-1126, XP055618367, DOI: 10.1109/ICEMS.2013.6754391 ISBN: 978-1-4799-1446-3
- HUANG JIA ET AL: "Variable flux memory motors: A review", 2014 IEEE CONFERENCE AND EXPO TRANSPORTATION ELECTRIFICATION ASIA-PACIFIC (ITEC ASIA-PACIFIC), IEEE, 31. August 2014 (2014-08-31), Seiten 1-6, XP032672014, DOI: 10.1109/ITEC-AP.2014.6940781 [gefunden am 2014-10-30]

## Beschreibung

Die vorliegende Erfindung betrifft eine elektrische Maschine mit veränderlichem magnetischem Fluss.

### Stand der Technik

Elektrische Fahrzeuge werden üblicherweise von einer elektrischen Maschine angetrieben. Durch die unterschiedlichen Anforderungen verschiedener Fahrsituationen muss eine solche Maschine möglichst vielseitig einsetzbar ist. Insbesondere sollte sie über einen weiten Bereich von unterschiedlichen Drehzahlen und Lastzuständen funktionieren und dabei stets einen hohen Wirkungsgrad erreichen.

Um diesen Anforderungen gerecht zu werden, wurden unterschiedliche Typen von elektrischen Maschinen entwickelt. Ein besonders geeigneter Typ ist eine elektrische Maschine mit veränderlichem magnetischem Fluss. Bei dieser werden mindestens zwei verschiedene Typen von Permanentmagneten verwendet, wobei einer dieser Typen eine niedrigere Koerzitivfeldstärke besitzt als die zweite. So können Permanentmagnete dieses Typs je nach Lastzustand und Drehzahl durch einen geregelten Strompuls über die Ankerspulen im Stator auf- und entmagnetisiert werden. Zum Beispiel werden diese Permanentmagneten bei hohen Lastzuständen und geringerer Drehzahl aufmagnetisiert, damit ein hohes Drehmoment bereitgestellt werden kann. Auf der anderen Seite werden diese bei hoher Drehzahl aber geringer Last entmagnetisiert, so dass weniger Strom für die elektrische Maschine benötigt wird, und somit Verluste reduziert werden.

Für eine solche elektrische Maschine wurden unterschiedliche Strukturen und Topologien vorgeschlagen.

Die US 2012 / 0091848 A1 offenbart einen Rotor, der durch einen Rotorkern und Magneten mit variablem und festem magnetischem Fluss gebildet wird. Dabei wird die Magnetisierungsrichtung eines Magneten mit variablem magnetischem Fluss und eines Magneten mit festem magnetischem Fluss überlappend angeordnet, und damit eine Magnetreihe gebildet. Die Magnete befinden sich im Rotorkern an einer Stelle, an der die Magnetisierungsrichtung in Richtung einer d-Achse liegt. Auf beiden Seiten der Magnetreihe befinden sich weitere Magnete mit festem magnetischem Fluss, wobei deren Magnetisierungsrichtung ebenfalls in Richtung der d-Achse liegt. Im Falle einer Reduzierung der Magnetisierung des Magneten mit variablem magnetischem Fluss wird ein Strom an eine Ankerspule angelegt, so dass ein Magnetfeld in umgekehrter Richtung zur Magnetisierungsrichtung des variablen Magnetkraftmagneten wirken kann. Diese Konstruktion findet Anwendung in einer Waschmaschine, die so bei unterschiedlichen Lastzuständen und Drehzahlen betrieben werden kann.

Die WO 2017 / 023250 A1 offenbart einen Permanentmagnet-Synchronmotor. Dieser enthält einen Stator, einen relativ zum Stator drehbaren Rotor und Permanentmagnete mit niedriger und hoher Koerzitivfeldstärke. Diese Permanentmagnete sind magnetisch in Reihe zueinander angeordnet und definieren einen Pol in dem Permanentmagnet-Synchronmotor. Eine Magnetisierung des Magneten mit niedriger Koerzitivfeldstärke ist durch einen Strompuls im Stator veränderbar, der eine Magnetkraft erzeugt, die gleich oder größer ist als das Produkt von einer Magnetfeldstärke zur Vollmagnetisierung des Magneten mit niedriger Koerzitivfeldstärke und einer Dicke des Magneten mit niedriger Koerzitivfeldstärke.

Von essentieller Bedeutung in solchen Topologien ist es, Querfelder zu verhindern, die einem Drehfeld im Rotor entgegenwirken. Von diesen Querfeldern induzierte Ströme können leicht zumindest zu einer partiellen Entmagnetisierung betroffener Permanentmagneten führen. Weiterhin können induzierte Ströme zu einem Temperaturanstieg beitragen, der die Koerzitivfeldstärke betroffener Permanentmagneten reduzieren lassen und damit auch zumindest zu dessen partieller Entmagnetisierung führen würde. So benutzen die zwei oben zitieren Konstruktionen SmCo (Samarium-Kobald) als Material für die Permanentmagneten mit variablem magnetischem Fluss, welches eine relativ hohe Koerzitivfeldstärke aufweist.

Die WO 2018/051526 A1 und die CN 102 403 856 A beschreiben jeweils eine elektrische Maschine mit veränderlichem magnetischem Fluss mit einem Winkelsegment, welches ein äußeres Statorelement und ein inneres Rotorelement umfasst, wobei das Rotorelement um eine Drehachse drehbar ist und seine radiale Mittelachse einen magnetischen Pol bildet. Das Rotorelement umfasst außerdem einen oder mehrere Permanentmagneten eines ersten Typs und einen oder mehrere Permanentmagneten eines zweiten Typs, wobei die Permanentmagneten des ersten und zweiten Typs symmetrisch zur radialen Mittelachse angeordnet sind, die Permanentmagneten des ersten Typs eine niedrigere Koerzitivfeldstärke aufweisen als die Permanentmagneten des zweiten Typs, die Permanentmagneten des zweiten Typs näher an der Drehachse liegen als die Permanentmagnete des ersten Typs und die Permanentmagnete des ersten Typs parallel zur radialen Mittelachse magnetisiert sind.

Des Weiteren beschreiben auch die US 2010/327787 A1, die CN 103 441 592 A und Sakai K. et al: "Principle of the variable-magnetic-force memory motor" (ELECTRICAL MACHINES AND SYSTEMS, 2009, ICEMS 2009, INTERNATIONAL CONFERENCE ON, IEEE PISCATAWAY, NJ, USA, 15. November 2009 (2009-11-15), Seiten 1-6, XP031612074, ISBN: 978-1-4244-5177-7) jeweils eine elektrische Maschine mit veränderlichem magnetischem Fluss. Eine solche elektrische Mashine ist ebenfalls in den Dokumenten EP 3 675 329 A1 und DE 11 2012 005688 T5 offenbart

### Offenbarung der Erfindung

Die Erfindung schafft eine elektrische Maschine mit veränderlichem magnetischem Fluss nach Anspruch 1. Bevorzugte Weiterbildungen sind Gegenstand der jeweiligen Unteransprüche.

### Vorteile der Erfindung

Die der vorliegenden Erfindung zugrunde liegende Idee liegt darin, dass Permanentmagnete eines ersten Typs und zweiten Typs, wobei die Permanentmagnete des ersten Typs eine niedrigere Koerzitivfeldstärke als die des zweiten Typs aufweisen, und geeignet geformte und platzierte Hohlräume zur lokalen Verringerung der Induktivität kombiniert verwendet werden. Damit wird insbesondere einer ungewünschten Entmagnetisierung der Permanentmagneten mit niedriger Koerzitivfeldstärke durch Querfelder entgegengewirkt.

Die elektrische Maschine kann mit einem geregelten Dreiphasen-Strom angesteuert werden, der auf die in einem äußeren Statorelement befindlichen Ankerspulen angelegt wird. Dabei können die Permanentmagneten mit niedriger Koerzitivfeldstärke mit einem geregelten elektrischen Strompuls über Ankerspulen und Ankerkerne gezielt auf- und entmagnetisiert werden. Insbesondere werden die Permanentmagneten mit niedriger Koerzitivfeldstärke bei einer hohen Drehzahl und wenig Drehmoment entmagnetisiert, während sie bei hohem Drehmoment und geringer Last wieder aufmagnetisiert werden.

Dabei werden Querfelder im Rotorkern weitgehend verhindert, die Ströme entgegen des Drehfeldes induzieren würden. Die Permanentmagneten mit hoher Koerzitivfeldstärke werden dabei so angeordnet, dass sie auf die Permanentmagneten mit niedriger Koerzitivfeldstärke eine schützende Funktion haben. Außerdem stellen sie sicher, dass eine relativ hohe Drehmomentdichte der elektrischen Maschine erreicht wird. Dadurch können selbst bei hohen Lastzuständen Permanentmagnete wie z.B. AINiCo (Aluminium-Nickel-Kobald) verwendet werden, die eine relativ niedrige Koerzitivfeldstärke aufweisen. Diese sind zwar aus dem Stand der Technik bekannt, konnten aber bisher nicht für elektrische Maschinen mit hohen Anforderungen an Lasten verwendet werden, wie sie Elektrofahrzeuge benötigen.

Außerdem sind die Hohlräume an den seitlichen Rändern des Winkelelements auf einer elektrisch orthogonal zur radialen Mittelachse verlaufenden radialen Querachse angeordnet. Damit wird die Entstehung von Querfeldern an den zum Statorelement hinweisenden äußeren Rändern der Permanentmagnete des zweiten Typs vermieden. So verläuft eine im Vergleich größere Flussdichte durch die Permanentmagneten des zweiten Typs, wodurch die Stärke des Pols anwächst und die Permanentmagnete des ersten Typs vor einer ungewollten Entmagnetisierung geschützt werden.

Des Weiteren sind die Permanentmagnete des zweiten Typs mit Magnetisierung in tangentialer Richtung bezüglich der Drehachse angeordnet. Diese Anordnung bewirkt ein Richten des magnetischen Flusses an den Permanentmagneten des ersten Typs in Richtung ihrer Magnetisierung. Dadurch wird ein schräg verlaufendes Feld in den Permanentmagneten des ersten Typs vermieden, wodurch die Anordnung eine schützende Funktion auf diese vor ungewollter Entmagnetisierung ausübt.

Ferner sind die Permanentmagnete des zweiten Typs auf radialen Querachse angeordnet. Mit dieser Anordnung wird der magnetische Fluss über das gesamte Winkelsegment ausgedehnt, wodurch die elektrische Maschine mit höheren magnetischen Flüssen und damit höheren Drehmomenten betrieben werden kann.

Des Weiteren verlaufen zwei weitere Hohlräume im Inneren des Rotorkerns entlang der radialen Mittelachse. In dieser Anordnung dienen diese Hohlräume als magnetische Barrieren und bewirken ein Richten des magnetischen Flusses insbesondere entlang der radialen Mittelachse. Dadurch wird die Entstehung von Querfeldern verhindert, die eine mögliche ungewollte Entmagnetisierung des parallel zur radialen Mittelachse angeordneten Permanentmagneten zur Folge haben könnte.

Weiter erfindungsgemäß erstrecken sich zwei weitere Hohlräume im Inneren des Rotorkerns von den Permanentmagneten des zweiten Typs aus in tangentialer Richtung bezüglich der Drehachse hin zur radialen Mittelachse. Diese Hohlräume bilden magnetische Barrieren und verhindern, dass Querfelder entgegengesetzt dem Drehfeld entstehen, welche zu einer Entmagnetisierung der Permanentmagnete führen könnten.

Gemäß einer weiteren bevorzugten Weiterbildung sind die Permanentmagnete des ersten Typs zu den Permanentmagneten des zweiten Typs mit mindestens einem gemeinsamen Hohlraum verbindend angeordnet. Diese als magnetischen Barrieren fungierenden Hohlräume verhindern induzierte Ströme zwischen den sehr nahe angeordneten Permanentmagneten des ersten und des zweiten Typs, die sonst eine Entmagnetisierung an den Rändern zur Folge haben würden.

Gemäß einer weiteren bevorzugten Weiterbildung ist eine Vielzahl von entlang des magnetischen Flusses gestalteten Hohlräumen in einem relativ zu den Permanentmagneten umschlossenen Bereich des Rotorkerns symmetrisch zur radialen Mittelachse angeordnet. Diese in Richtung des magnetischen Flusses verlaufenden magnetischen Barrieren erhöhen die Flussdichte an den Bereichen zwischen den Hohlräumen und führen somit zu einer verstärkten Wirkung des Pols. Außerdem werden entgegengesetzt zum Drehfeld verlaufende Querfelder zwischen den Permanentmagneten des ersten und zweiten Typs verhindert.

Gemäß einer weiteren bevorzugten Weiterbildung enthalten die Permanentmagneten des ersten Typs AlNiCo (Aluminium-Nickel-Kobald). Dieses Material besitzt eine relativ niedrige Koerzitivfeldstärke bei einer relativ hohen magnetischen Remanenz. Durch die relativ niedrige Koerzitivfeldstärke kann die elektrische Maschine zwischen den Betriebsmodi leichter umgeschaltet werden als zum Beispiel bei der Verwendung von SmCo (Samarium-Kobald), weil das Auf- und Entmagnetisierens mit niedrigeren Strompulsen erreicht werden kann. Durch einen sehr guten Temperaturkoeffizienten und einer relativ hohen oberen Gebrauchstemperatur ist das Material temperaturbeständig, was eine temperaturbedingte Entmagnetisierung im Betrieb unwahrscheinlich werden lässt. Außerdem ist das Material kostengünstig und leichter verfügbar, was es aus ökonomischer Sicht attraktiv macht. Gemäß einer weiteren bevorzugten Weiterbildung enthalten die Permanentmagneten des zweiten Typs NdFeB (Neodym-Eisen-Bor). Dieser Magnet besitzt eine relativ hohe Koerzitivfeldstärke bei relativ hoher magnetischer Remanenz. Somit lässt sich solch ein Permanentmagnet nur schwer entmagnetisieren, was eine Langzeitbenutzung begünstigt. Die hohe magnetische Remanenz des Permanentmagneten aus diesem Material ermöglicht eine elektrische Maschine mit hoher Drehmomentdichte.

Weitere Merkmale und Vorteile der vorliegenden Erfindung werden nachfolgend anhand von Ausführungsformen mit Bezug auf die Figuren erläutert.

Es zeigen:
Fig. 1 eine schematische Querschnittsdarstellung zur Erläuterung einer elektrischen Maschine mit veränderlichem magnetischem Fluss, welche nicht unter die voliegende Erfindung fällt;
Fig. 2 eine schematische Querschnittsdarstellung zur Erläuterung einer elektrischen Maschine mit veränderlichem magnetischem Fluss gemäß einer Ausführungsform der vorliegenden Erfindung;
Fig. 3 eine schematische Querschnittsdarstellung einer elektrischen Maschine mit veränderlichem magnetischem Fluss, welche nicht unter die vorliegende Erfindung fällt;
Fig. 4 eine schematische Querschnittsdarstellung einer elektrischen Maschine mit veränderlichem magnetischem Fluss , welche nicht unter die vorliegende Erfindung fällt; und
Fig. 5 eine schematische Querschnittsdarstellung einer elektrischen Maschine , welche nicht unter die vorliegende Erfindung fällt.

### Ausführungsformen der Erfindung

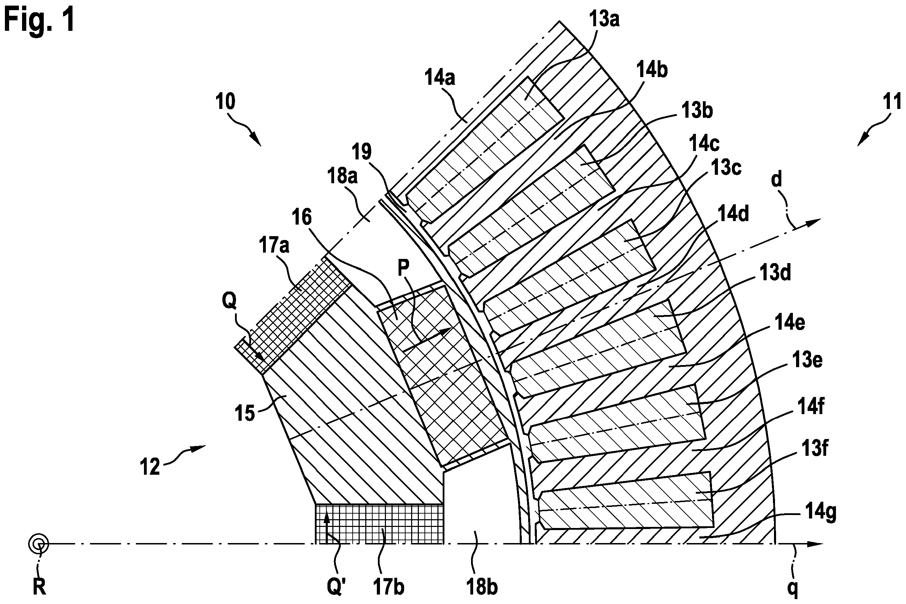

In den Figuren bezeichnen gleiche Bezugszeichen gleiche bzw. funktionsgleiche Elemente. Fig. 1 ist eine schematische Querschnittsdarstellung zur Erläuterung einer elektrischen Maschine mit veränderlichem magnetischem Fluss.

Darin ist ein Winkelsegment 10 gezeigt, welches ein äußeres Statorelement 11 und ein inneres Rotorelement 12 enthält. Das Statorelement enthält Ankerspulen 13a, 13b, 13c, 13d, 13e, 13f, die um Ankerkerne 14a, 14b, 14c, 14d, 14e, 14f, 14g gewickelt sind. Hierbei werden bevorzugt Anker-Kerne aus Elektroblech verwendet, um einer Wärmeentwicklung, wie sie zum Beispiel bei einem Kern aus Eisen entstehen würde, entgegenzuwirken. Für die Anker-Spulen wird bevorzugt Kupferlackdraht verwendet.

Ein sich um eine Drehachse R rotierendes inneres Rotorelement 12 enthält einen Rotorkern 15, in dem Permanentmagneten 16, 17a, 17b zweier verschiedener Typen symmetrisch zur radialen Mittelachse d enthalten sind. Dabei besitzt ein Permanentmagnet 16 des ersten Typs eine niedrigere Koerzitivfeldstärke als Permanentmagnete 17a, 17b des zweiten Typs. Der Permanentmagnet 16 des ersten Typs ist in einem äußeren Bereich des Rotorelements angeordnet, dessen Magnetisierung entlang einer radialen Mittelachse d des Winkelsegments 10 zeigt, wodurch die radiale Mittelachse d einen magnetischen Pol P bildet. Die Permanentmagneten 17a, 17b des zweiten Typs sind an den seitlichen Rändern des Winkelelements 10 auf einer radialen Querachse q, die elektrisch orthogonal zur radialen Mittelachse d ist, angeordnet. Die Magnetisierung Q, Q' der Permanentmagneten 17a, 17b des zweiten Typs sind dabei in tangentialer Richtung relativ zur Drehachse R angeordnet und erstrecken sich zur radialen Mittelachse d.

Außerdem enthält das Rotorelement 12 mindestens zwei Hohlräume 18a 18b, die auf einer zum Statorelement 11 hinweisenden Seite des Rotorkerns 12 an den seitlichen Rändern des Winkelelements 10 angeordnet sind. Diese Hohlräume 18a, 18b reduzieren die Induktivität entlang der Querachse q und stellen damit eine erste magnetische Barriere dar, die dafür sorgt, dass keine Querfelder an den Rändern des Winkelelements 10 entstehen, die eine ungewollte Entmagnetisierung der Permanentmagneten zur Folge hätte. Dabei sind die Hohlräume 18a, 18b so ausgebildet, dass sie nur eine relativ dünne Wand von den Permanentmagneten 16, 17a, 17b trennt. Ein Luftspalt 19 trennt das Rotorelement vom Statorelement.

Als bevorzugtes Material für den Rotorkern 15 wird Elektroblech aufgrund seiner allgemein bekannten günstigen Eigenschaften verwendet. Als Permanentmagnet 16 des ersten Typs wird bevorzugt AlNiCo (Aluminium-Nickel-Kobald) aus den oben angeführten Gründen verwendet. Insbesondere besitzt diese Material eine relativ zu anderen Permanentmagneten niedrige Koerzitivfeldstärke bei relativ hoher magnetischer Remanenz. Durch die niedrige Koerzitivfeldstärke kann dieser leicht vom Statorelement 11 aus auf- und entmagnetisiert werden. Als Material für die Permanentmagneten 17a, 17b des zweiten Typs wird bevorzugt das Material NdFeB (Neodym-Eisen-Bor) aus den bekannten und oben bereits angeführten Vorteilen verwendet. Insbesondere verstärkt das magnetische Feld der Permanentmagneten 17a, 17b des zweiten Typs durch dessen hohe magnetische Remanenz die Permanentmagneten 16 des ersten Typs was zu einer größeren Flussdichte im Luftspalt 19 und damit zu einer höheren Drehmomentdichte führt.

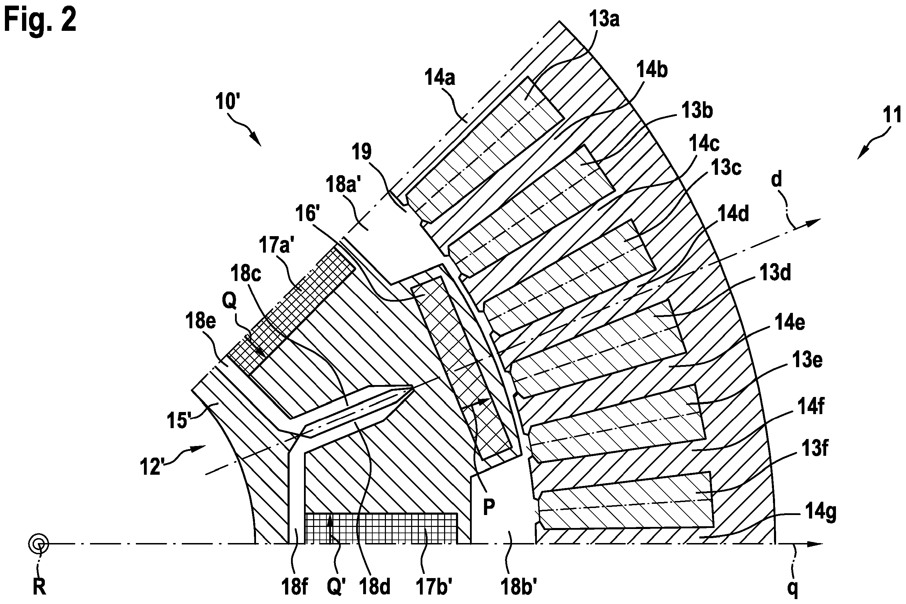

Fig. 2 ist eine schematische Querschnittsdarstellung zur Erläuterung einer elektrischen Maschine mit veränderlichem magnetischem Fluss gemäß einer Ausführungsform der vorliegenden Erfindung.

Diese auf der ersten Ausführungsform basierende Ausführungsform enthält ein Winkelsegment 10', das ein um eine Drehachse R rotierendes inneres Rotorelement 12' und einen Rotorkern 15' umfasst, in dem Permanentmagneten 16', 17a', 17b' zweier verschiedener Typen symmetrisch zur radialen Mittelachse d enthalten sind. Zusätzlich zu den Hohlräumen 18a', 18b' weist diese Ausführungsform noch Hohlräume 18c, 18d im Inneren des Rotorkerns 15' entlang der radialen Mittelachse d auf. Außerdem sind Hohlräume 18e, 18f vorhanden, die sich im Inneren des Rotorkerns 15' von den Permanentmagneten 17a', 17b' des zweiten Typs aus in im Wesentlichen tangentialer Richtung bezüglich der Drehachse R hin zur radialen Mittelachse d erstrecken.

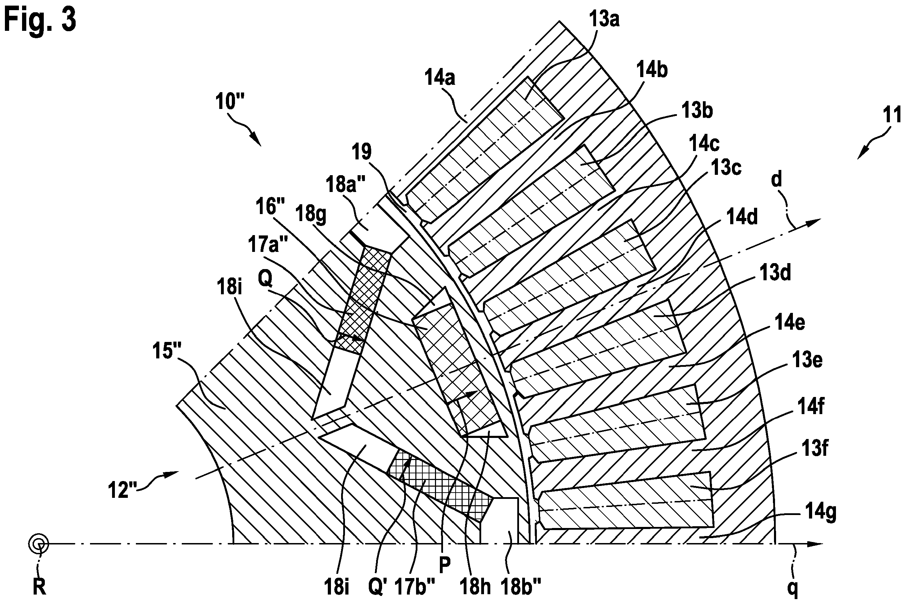

Fig. 3 ist eine schematische Querschnittsdarstellung zur Erläuterung einer elektrischen Maschine mit veränderlichem magnetischem Fluss.

Diese auf der ersten Ausführungsform basierte Ausführungsform zeigt ein Winkelsegment 10", das ein um eine Drehachse R rotierendes inneres Rotorelement 12" und einen Rotorkern 15" aufweist, in dem Permanentmagneten 16", 17a", 17b" zweier verschiedener Typen symmetrisch zur radialen Mittelachse d eingesetzt sind. Hierbei sind die Permanentmagnete 17a", 17b" des zweiten Typs so geneigt, dass dessen Magnetisierung Q, Q' senkrecht zu ihrer Oberfläche hin zur radialen Mittelachse d mit einem Winkel von 35°-55°, insbesondere 45°, verläuft. Zusätzlich zu den Hohlräumen 18a", 18b" sind Hohlräume 18g, 18h seitlich an den Permanentmagneten 16" des ersten Typs angrenzend angeordnet. Außerdem erstrecken sich weitere Hohlräume 18i, 18j von den Permanentmagneten 17a", 17b" des zweiten Typs mit einem Winkel von ungefähr 35°-55°, insbesondere von 45°, relativ zur radialen Mittelachse d hin ins Innere des Rotorkerns 15".

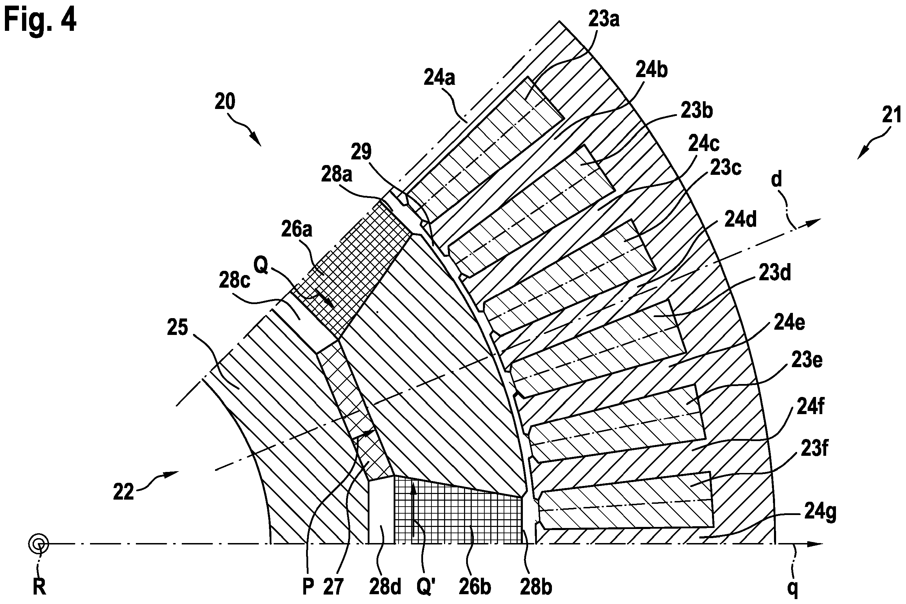

Fig. 4 ist eine schematische Querschnittsdarstellung zur Erläuterung einer elektrischen Maschine mit veränderlichem magnetischem Fluss.

Diese Ausführungsform wird als eine Alternativlösung zur ersten Ausführungsform für das Problem angesehen. Diese umfasst ähnlich zur ersten Ausführungsform ein Winkelsegment 20 einer elektrischen Maschine mit veränderlichem magnetischem Fluss mit einem äußeren Statorelement 21 und einem inneren Rotorelement 22. Das Statorelement 21 enthält Ankerspulen 23a, 23b, 23c, 23d, 23e, 23f, die um Ankerkerne 24a, 24b, 24c, 24d, 24e, 24f, 24g gewickelt sind und bevorzugt aus Elektroblech gestaltet sind.

Das innere Rotorelement 22, dessen radiale Mittelachse d einen magnetischen Pol P bildet, enthält einen Rotorkern 25, der um eine Drehachse R drehbar ist. In dem Rotorkern 25 sind Permanentmagneten 26a, 26b, 27 zweier verschiedener Typen symmetrisch zur radialen Mittelachse d eingesetzt. Dabei besitzen die Permanentmagneten 26a, 26b des ersten Typs eine niedrigere Koerzitivfeldstärke als der Permanentmagnet 27 des zweiten Typs. Im Unterschied zur ersten Ausführungsform sind die Permanentmagneten 26a, 26b des ersten Typs tangential polarisiert und auf der Querachse q angeordnet. Der Permanentmagnet 27 des zweites Typs hingegen ist radial polarisiert und auf der radialen Mittelachse d angeordnet. Weiterhin befindet er sich näher an der Drehachse R als die Permanentmagneten 26a, 26b des ersten Typs.

Neben den an den äußeren Bereichen des Rotorelements 22 auf der Querachse befindlichen Hohlräumen 28a, 28b sind in dieser Ausführungsform Hohlräume 28c, 28d enthalten, die verbindend zu den Permanentmagneten 26a, 26b des ersten Typs und den Permanentmagneten 27 des zweiten Typs angeordnet sind. Diese verhindern Querfelder an den Rändern der Permanentmagnete, die insbesondere die Permanentmagneten 16a, 16b des ersten Typs leicht entmagnetisieren könnten. Somit lässt sich mit dieser Anordnung ein stärkeres magnetisches Feld in den Permanentmagneten 26a, 26b des ersten Typs anlegen, was zu einer größeren Flussdichte im Luftspalt 29 und damit zu einer höheren Drehmomentdichte führt. Auch in dieser Ausführungsform wird bevorzugt Elektroblech als Material für den Rotorkern 25, AlNiCo (Aluminium-Nickel-Kobald) als Material für die Permanentmagneten 26a, 26b des ersten Typs und NdFeB (Neodym-Eisen-Bor) als Material für den Permanentmagneten 17 des zweiten Typs verwendet.

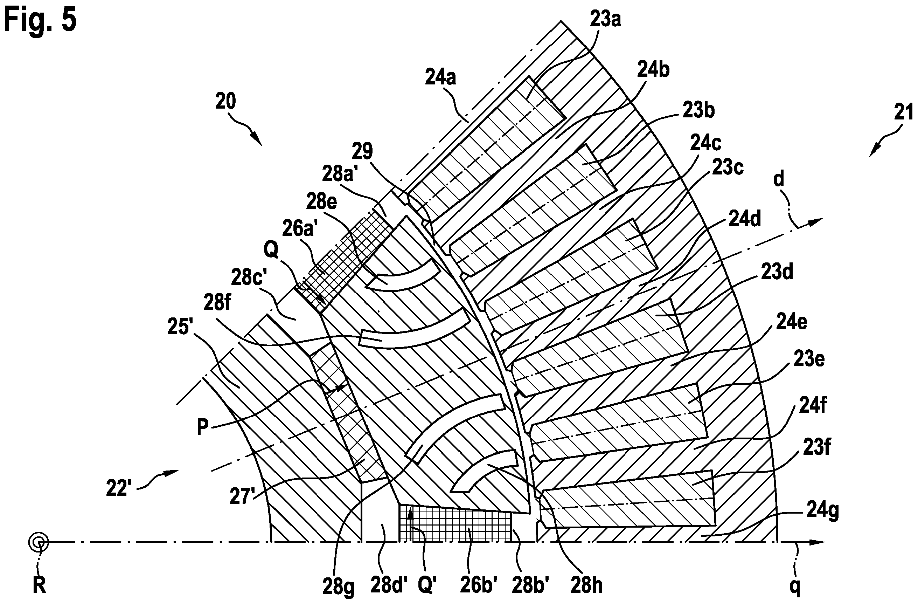

Fig. 5 ist eine schematische Querschnittsdarstellung zur Erläuterung einer elektrischen Maschine mit veränderlichem magnetischem Fluss.

Diese Ausführungsform basiert auf der vierten Ausführungsform und umfasst ein Winkelelement 20' mit einem Rotorelement 22'. Der Rotorkern 25' enthält neben den Hohlräumen 28a', 28b' noch zusätzliche Hohlräume 28e, 28f, 28g, 28h, die entlang des magnetischen Flusses gestaltet sind. Diese Hohlräume 28e, 28f, 28g, 28h sind in einem relativ zu den Permanentmagneten 26a', 26b', 27' umschlossenen Bereich des Rotorkerns 25' symmetrisch zur radialen Mittelachse d angeordnet.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuterten Beispiele beschränkt.

Insbesondere können andere Neigungsrichtungen Winkel, Geometrien etc. für die einzelnen Elemente gewählt werden.

Außerdem ist die elektromagnetische Periodizität in der elektrischen Maschine zu beachten. Nach dieser sind entsprechende Permanentmagnete benachbarter Winkelsegmente entgegengesetzt magnetisiert.

## Patentansprüche

1. Elektrische Maschine mit veränderlichem magnetischem Fluss mit einer Vielzahl von Winkelsegmenten (10`), jeweils umfassend:
ein äußeres Statorelement (11) mit einer Mehrzahl von Ankerspulen (13a - 13f), die um jeweilige Ankerkerne (14a - 14g) gewickelt sind;
ein inneres Rotorelement (12') dessen radiale Mittelachse (d) einen magnetischen Pol (P) bildet, mit einem Rotorkern (15`), der um eine Drehachse (R) drehbar ist, wobei jedes Winkelsegment (10`) durch elektrisch orthogonal zur radialen Mittelachse (d) verlaufende radiale Querachsen (q) begrenzt ist;
wobei das Rotorelement (12') zumindest einen Permanentmagneten (16`) eines ersten Typs und mehrere Permanentmagneten (17a', 17b`) eines zweiten Typs umfasst,
wobei die Permanentmagneten (16`, 17a', 17b`) des ersten und zweiten Typs symmetrisch zur radialen Mittelachse (d) angeordnet sind,
wobei der Permanentmagnet (16`) des ersten Typs eine niedrigere Koerzitivfeldstärke aufweist als die Permanentmagneten (17a', 17b`) des zweiten Typs,
wobei der Permanentmagnet (16`) des ersten Typs parallel zur radialen Mittelachse (d) magnetisiert ist,
wobei eine Magnetisierung (Q, Q') der Permanentmagnete (17a`, 17b`) des zweiten Typs einen Winkel zur Mittelachse (d) aufweist,
wobei die Magnetisierung (Q, Q') der Permanentmagnete (17a`, 17b`) des zweiten Typs in Richtung des Inneren des Winkelsegments (10') zeigt,
wobei der Permanentmagnet (17a', 17b`) des zweiten Typs näher an der Drehachse (R) liegt als der Permanentmagnet (16`) des ersten Typs,
und wobei mindestens zwei Hohlräume (18a', 18b') auf einer zum Stator hinweisenden Seite des Rotorkerns angeordnet sind,
wobei ein erster Hohlraum (18a`) und ein zweiter Hohlraum (18b') der mindestens zwei Hohlräume (18a', 18b') auf der zum Statorelement (11) hinweisenden Seite des Rotorkerns (12) an den seitlichen Rändern des Winkelelements (10) jeweils auf einer der elektrisch orthogonal zur radialen Mittelachse (d) verlaufenden radialen Querachsen (q) und in Umfangsrichtung beidseitig des Permanentmagneten (16') des ersten Typs angeordnet sind, und
wobei die Permanentmagneten (17a', 17b`) des zweiten Typs mit Magnetisierung (Q, Q') in tangentialer Richtung bezüglich der Drehachse (R) angeordnet sind,
wobei die Permanentmagnete (17a`, 17b`) des zweiten Typs länglich ausgebildet, radial ausgerichtet und jeweils auf einer der radialen Querachsen (q) angeordnet sind, und
wobei zwei weitere Hohlräume (18c, 18d) im Inneren des Rotorkerns (15`) entlang der radialen Mittelachse (d) und in Umfangsrichtung zwischen den Permanentmagneten des zweiten Typs (17a', 17b`) verlaufen, und zwei weitere Hohlräume (18e, 18f) sich im Inneren des Rotorkerns (15') von den Permanentmagneten (17a`, 17b`) des zweiten Typs aus in tangentialer Richtung bezüglich der Drehachse (R) hin zur radialen Mittelachse (d) erstrecken und näher an der Drehachse (R) liegen als die Permanentmagnete des zweiten Typs (17a`, 17b').

2. Elektrische Maschine mit veränderlichem Fluss aus Anspruch 1, wobei die Permanentmagneten (16') des ersten Typs AlNiCo enthalten.

3. Elektrische Maschine mit veränderlichem Fluss aus einem der Ansprüche 1-2, wobei die Permanentmagneten (17a', 17b`) des zweiten Typs NdFeB enthalten.

## Claims

1. Variable-magnetic-flux electric machine having a multiplicity of angle segments (10'), each comprising:
an outer stator element (11) with a plurality of armature coils (13a-13f), which are wound around respective armature cores (14a-14g);
an inner rotor element (12'), of which the radial centre axis (d) forms a magnetic pole (P), having a rotor core (15'), which is rotatable about an axis of rotation (R), wherein each angle segment (10') is delimited by radial transverse axes (q) extending orthogonally to the radial centre axis (d) in electrical terms;
wherein the rotor element (12') comprises at least one permanent magnet (16') of a first type and multiple permanent magnets (17a', 17b') of a second type,
wherein the permanent magnets (16', 17a', 17b') of the first and the second type are arranged symmetrically in relation to the radial centre axis (d),
wherein the permanent magnet (16') of the first type has a lower coercive field strength than the permanent magnets (17a', 17b') of the second type,
wherein the permanent magnet (16') of the first type is magnetized parallel to the radial centre axis (d),
wherein a magnetization (Q, Q') of the permanent magnets (17a', 17b') of the second type is at an angle in relation to the centre axis (d),
wherein the magnetization (Q, Q') of the permanent magnets (17a', 17b') of the second type points in the direction of the interior of the angle segment (10'),
wherein the permanent magnet (17a', 17b') of the second type is closer to the axis of rotation (R) than the permanent magnet (16') of the first type,
and wherein at least two cavities (18a', 18b') are arranged on a side of the rotor core that faces towards the stator,
wherein a first cavity (18a') and a second cavity (18b') of the at least two cavities (18a', 18b') are arranged on that side of the rotor core (12) that faces towards the stator element (11) at the lateral edges of the angle element (10) in each case on one of the radial transverse axes (q) extending orthogonally in relation to the radial centre axis (d) in electrical terms and in the circumferential direction on either side of the permanent magnet (16') of the first type, and
wherein the permanent magnets (17a', 17b') of the second type are arranged with a magnetization (Q, Q') in the tangential direction with respect to the axis of rotation (R),
wherein the permanent magnets (17a', 17b') of the second type have an elongate form, are aligned radially and are each arranged on one of the radial transverse axes (q), and wherein two further cavities (18c, 18d) extend inside the rotor core (15') along the radial centre axis (d) and in the circumferential direction between the permanent magnets (17a', 17b') of the second type, and two further cavities (18e, 18f) extend inside the rotor core (15') from the permanent magnets (17a', 17b') of the second type towards the radial centre axis (d) in the tangential direction with respect to the axis of rotation (R) and are closer to the axis of rotation (R) than the permanent magnets (17a', 17b') of the second type.

2. Variable-flux electric machine according to Claim 1, wherein the permanent magnets (16') of the first type contain AlNiCo.

3. Variable-flux electric machine according to either of Claims 1-2, wherein the permanent magnets (17a', 17b') of the second type contain NdFeB.

## Revendications

1. Machine électrique à flux magnétique variable avec une pluralité de segments angulaires (10'), chacun comprenant :
un élément de stator extérieur (11) avec une pluralité de bobines d'induit (13a - 13f) enroulées autour de noyaux d'induit respectifs (14a - 14g) ;
un élément de rotor intérieur (12') dont l'axe central radial (d) forme un pôle magnétique (P), avec un noyau de rotor (15') qui peut tourner autour d'un axe de rotation (R), chaque segment angulaire (10') étant délimité par des axes transversaux radiaux (q) s'étendant électriquement de manière orthogonale à l'axe central radial (d) ;
dans laquelle l'élément de rotor (12') comprend au moins un aimant permanent (16') d'un premier type et plusieurs aimants permanents (17a', 17b') d'un deuxième type,
dans laquelle les aimants permanents (16', 17a', 17b') des premier et deuxième types sont agencés symétriquement par rapport à l'axe central radial (d),
dans laquelle l'aimant permanent (16') du premier type présente une force de champ coercitif inférieure à celle des aimants permanents (17a', 17b') du deuxième type,
dans laquelle l'aimant permanent (16') du premier type est magnétisé parallèlement à l'axe central radial (d),
dans laquelle une magnétisation (Q, Q') des aimants permanents (17a', 17b') du deuxième type présente un angle avec l'axe central (d),
dans laquelle l'aimantation (Q, Q') des aimants permanents (17a', 17b') du deuxième type est orientée en direction de l'intérieur du segment angulaire (10'),
dans laquelle l'aimant permanent (17a', 17b') du deuxième type est plus proche de l'axe de rotation (R) que l'aimant permanent (16') du premier type,
et dans laquelle au moins deux cavités (18a', 18b') sont agencées sur un côté du noyau de rotor dirigé vers le stator,
dans laquelle une première cavité (18a') et une deuxième cavité (18b') des au moins deux cavités (18a', 18b') sont agencées sur le côté du noyau de rotor (12) dirigé vers l'élément de stator (11) sur les bords latéraux de l'élément angulaire (10), respectivement sur l'un des axes transversaux radiaux (q) s'étendant électriquement de manière orthogonale à l'axe central radial (d) et dans la direction circonférentielle de part et d'autre de l'aimant permanent (16') du premier type, et
dans laquelle les aimants permanents (17a', 17b') du deuxième type sont agencés avec une magnétisation (Q, Q') dans une direction tangentielle par rapport à l'axe de rotation (R),
dans laquelle les aimants permanents (17a', 17b') du deuxième type sont configurés sous forme allongée, alignés radialement et agencés chacun sur l'un des axes transversaux radiaux (q), et dans laquelle deux autres cavités (18c, 18d) s'étendent à l'intérieur du noyau de rotor (15') le long de l'axe central radial (d) et dans la direction circonférentielle entre les aimants permanents du deuxième type (17a', 17b'), et deux autres cavités (18e, 18f) s'étendent à l'intérieur du noyau de rotor (15') à partir des aimants permanents (17a', 17b') du deuxième type dans une direction tangentielle par rapport à l'axe de rotation (R) vers l'axe central radial (d) et sont plus proches de l'axe de rotation (R) que les aimants permanents du deuxième type (17a', 17b').

2. Machine électrique à flux variable selon la revendication 1, dans laquelle les aimants permanents (16') du premier type comprennent de l'AlNiCo.

3. Machine électrique à flux variable selon l'une quelconque des revendications 1 à 2, dans laquelle les aimants permanents (17a', 17b') du deuxième type comprennent du NdFeB.
